Europäisches Patentamt

European Patent Office

Office européen des brevets

(11) Publication number : **0 605 221 A1**

(12) **EUROPEAN PATENT APPLICATION**

(21) Application number : 93310521.5

(22) Date of filing : 23.12.93

(51) Int. Cl.⁵ : **A01N 63/04, // (A01N63/04, 43:16, 25:08, 25:12)**

(30) Priority : 28.12.92 JP 358833/92
05.10.93 JP 271218/93

(43) Date of publication of application :
06.07.94 Bulletin 94/27

(84) Designated Contracting States :
AT BE CH DE DK ES FR GB GR IE IT LI LU MC NL PT SE

(71) Applicant : JAPAN TOBACCO INC.
12-62, Higashishinagawa 4-chome,
Shinagawa-ku, Tokyo 140 (JP)

(72) Inventor : Matsuki, Tomoko c/o Japan Tobacco Inc.
Appl.Plant Res.Lab.
Yokohama Center, 6-2, Umegaoka
Midori-ku, Yokohama, Kanagawa, 227 (JP)
Inventor : Negishi, Hideaki c/o Japan Tobacco Inc.
Appl.Plant Res.Lab.
Yokohama Center, 6-2, Umegaoka
Midori-ku, Yokohama, Kanagawa, 227 (JP)
Inventor : Tsukamoto, Hiroshi c/o Japan Tobacco Inc.
Appl.Plant Res.Lab.
Yokohama Center, 6-2, Umegaoka
Midori-ku, Yokohama, Kanagawa, 227 (JP)

(74) Representative : Ruffles, Graham Keith
MARKS & CLERK,
57-60 Lincoln's Inn Fields
London WC2A 3LS (GB)

(54) **Viable cell-containing preparation and the preparation method thereof.**

(57)    The object of the present invention is to provide a viable cell-containing preparation which is useful in biotic agricultural chemicals, and the preparation method thereof. The preparation of the present invention contains, as an active principal component, viable cells of microorganisms such as mold fungi and others which were conventionally believed to be difficult to develop commercially, given the activity and durability problems due to their low activity and poor conservability when used as biotic agricultural chemicals. The present invention allows for the use of such viable cells in biotic agricultural chemicals by its excellent activity and durability. Specifically, the present invention resides in drying and preparing a solution which contains viable cells, a saccharide and a property improver which improves efficacy of the cells, the saccharide and a mixture of the cells and the saccharide.

SPECIFICATION

Field of the Invention

This invention relates to a viable cell-containing preparation and the preparation method thereof and, more particularly, a viable cell-containing preparation, having, as an active principal component, viable cells of microorganisms such as mold fungi and others useful for biotic agricultural chemicals and the preparation method thereof.

Prior Art

The sustainable development of new chemical pesticides is becoming difficult due to development cost increases though they have been used conventionally.

Moreover, biological control is attracting much attention given the increasing concern of the impact of agricultural chemicals on the environment.

The control of vermin using natural predater insects has a long history and, recently, microbial pesticides containing microorganisms as active principal components are seen to be most promising.

Known examples of biologicals utilizing mold fungi in microorganisms include the following: the control of weeds named Aeschynomene virginica in the paddy field by using Colletotrichum gloeosporioides in the U.S.A., the control of vermin of mulberry or fig by using Beauveria bassiana living on Psacothea hilaris, the control of stem rot of sweet potato by use of Fusarium oxysporum, etc. in Japan. The development of microbial herbicides, microbial pesticides and microbial bactericides are being conducted using mold fungi as active principal component.

Microbial herbicides are being commercialized and put on the market under the trade name of "DeVine" and "Collego" in the U.S.A. as microbial agricultural chemicals containing as an active component mold fungi in which spores can be produced by a liquid culture.

Moreover, a method of stirring granulation in a non-aqueous system by means of a heat melting binder material and microbial cells or a powder containing it [TOKKYO-KOKAI-KOHO (18-month Publication of Unexamined Patent Application) SHOWA 63(1988)-63373 (hereinafter referred to as TOKKAISHO 63-63373)] and others are known as preparation methods of useful microorganisms in the form of granules.

Conventionally, it has been our common understanding that mold fungi hyphae are less active, durable and conservable, though the spore of mold fungi is durable (conservable), excellent as an active unit and adapted to be used in microbial agricultural chemicals.

Mold fungi produce various organs such as spore, hypha and a nucleus, however, when mold fungi are cultured by use of a liquid culture in a large tank, which is most effective for the culture, most of the produced cells are hyphae; so it has been difficult to obtain a large amount of spore.

Consequently, it has been believed it would be difficult to develop commercially mold fungi producing a large amount of hyphae in liquid culture as an active component in microbial agricultural chemicals from the view point of activity and durability.

Additionally, the method disclosed in TOKKAISHO 63-63373, was insufficient as a production method of a biological control preparation because, though the viable cell survival rate is high, the quantity of viable cells does not necessarily contribute to sustaining the activity when the method is applied to microorganisms for biological control on the one hand and it was not evident if the method could enhance the activity of the hyphae and other organs, a function essential for their use, on the other hand.

Disclosure of the Invention

An object of the present invention is to supply a viable cell-containing preparation contains as an active principal component viable cells of microorganisms such as mold fungi and others. These microorganisms were believed to be difficult to develop commercially, given their activity and durability problems due to their low activity and poor conservability when used as biotic agricultural chemicals. The present invention allows the use of such microorganisms in, biotic agricultural chemicals which have excellent activity and durability, and the preparation method thereof.

The inventors have found that viable cell-containing preparations containing as an active principal component microorganisms that can be conserved for a long time period and have the activity of which is higher than before drying can be produced by subjecting microorganisms to a shaking culture in a liquid culture according to a conventional method, homogenizing and collecting the cells after washing, preparing a cell suspension containing 5 to 90%, preferably 10 to 40% of cells, 1 to 50%, preferably 5 to 15% of saccharide, 0.1 to 70%, preferably 0.5 to 5% of property improver which improves efficacy of components and, if necessary, 0.1 to 30%, preferably 0.5 to 2% of a nitrogen source and drying naturally the suspension spreaded or sprayed in the form of a thin film, and thus completed the invention.

The present invention includes the following embodiments:

In a first embodiment, a viable cell-containing preparation is provided which contains viable cells, a saccharide and a property improver which improves efficacy of the cells, the saccharide and a mixture of the cells and the saccharide.

In a second embodiment, a viable cell-containing preparation is provided which contains viable cells, a saccharide, a nitrogen source and a property improver which improves efficacy of the cells, the saccharide, the nitrogen source and a mixture of the cells, the saccharide and the the nitrogen source.

In a third embodiment, a method of a viable cell -containing preparation comprises the steps of drying and preparing a solution which contains viable cells, a saccharide and a property improver which improves efficacy of the cells, the saccharide and a mixture of the cells and the saccharide.

In a fourth embodiment, a method of a viable cell -containing preparation comprises the steps of drying and preparing a solution which contains viable cells, a saccharide, a nitrogen source and a property improver which improves efficacy of the cells, the saccharide, the nitrogen source and a mixture of the cells, the saccharide and the nitrogen source.

In a fifth embodiment, a method of a viable cell -containing preparation comprises the steps of making a thin film by spreading or spraying the solution described above in the third or fourth embodiments, and then drying the same.

It is noted that the property improver which improves efficacy of the cells and the various mixtures includes mineral resolvent, a biologically and chemically inactive material, that can facilitate the preparation process of a powder by preventing caramelization of the cells and the various mixtures such as silica gel 60, Celite, clay, diatomaceous earth, Radiolite containing diatomaceous earth as principal component or GSM (trade name; made by Gieclite Co., Ltd.) containing silicic acid as principal component.

The powder preparation process of the present invention makes the weighing and packing easier, improves the suspensionability and improves the effect per unit weight.

The optimal microorganisms (for example mold fungi) include those belonging to the genus _Nimbya_ or the genus _Exserohilum_ and others.

As saccharide, disaccharide having linked 2 six-membered rings represented by lactose, maltose, trehalose can be used.

As the nitrogen source, peptone, broth and others are suitable.

Glass plate, Teflon (trade name: Du Pont Co., Ltd.) plate and others, for example, are appropriate as the material on which cell-containing solution can be spreaded or sprayed in the form of a thin film.

According to the viable cell-containing preparation and the preparation method thereof of the present invention, though the same contains as an active principal component viable cells of microorganisms such as hyphae of mold fungi and others which were believed to be difficult to develop commercially because of their activity and durability problems due to their low activity and poor conservability when conventially used in biotic agricultural chemicals, the preparation of the present invention has excellent activity and durability and can be used in biotic agricultural chemicals.

Description of the Preferred Embodiments

The present invention shall now be described in more detail referring to the following embodiments, which however should not be understood to limit the invention.

In the following embodiments, a viable cell-containing preparation useful as a herbicide for spikesedge is made by using a C-100 culture solution and hyphomycetes K-004 (_Nimbya scirpicola_, FERM BP-4448); and a viable cell-containing preparation useful as a herbicide for barnyard grass is made by using a C-100 culture solution, hyphomycetes B026 (_Exserohilum monoceras_, FERM BP-4215) and hyphomycetes B276 (_Exserohilum monoceras_, FERM BP-4220). These embodiments respectively are described below.

K-004 (_Nimbya scirpicola_) was deposited as FERM P-11495 on June 2, 1990 with the National Institute of Bioscience and Human-Technology, Agency of Industrial Science and Technology, the Ministry of International Trade and Industry (former Fermentation Research Institute, Agency of Industrial Science and Technology, the Ministry of International Trade and Industry) located in Ibaraki-ken, Japan, and was transferred to the International deposit in the same on October 21, 1993 and given as modified accession number FERM BP-4448.

B026 (_Exserohilum monoceras_) was deposited as FERM BP-4215 on March 5, 1993 with the said National Institute of Bioscience and Human-Technology, Agency of Industrial Science and Technology, the Ministry of International Trade and Industry.

Additionally, B276 (<u>Exserohilum monoceras</u>) has been deposited as FERM BP-4220 on March 5, 1993 with the same.

The C-100 culture solution mentioned above is a culture solution of pH 6.0 containing 10% of glucose, 0.5% of yeast extract, 1.5% of sodium nitrate, 0.5% of potassium phosphate, 0.25% of magnesium sulfate, 0.25% of potassium chloride and 0.005% of iron sulfate.

Hyphomycetes K-004 is pathogenic against spikesedge and smallflower umbrellaplant, paddy field weeds which are difficult to control, hyphomycetes B026 and B276 are pathogenic against barnyard grass, the main weeds of the paddy field, but these hyphomycetes do not influence the growth of graminaceous plants such as paddy, wheat, etc., solanaceous plants such as egg plant, tomato, etc., cruciferous plants such as cabbage, Chinese cabbage, etc. or leguminous plants such as soybean, kidney bean, etc.

[Embodiment 1]

500 ml of C-100 culture solution is poured by 100 ml into 5 conical flasks of 500 ml respectively, sterilized and inoculated with hyphomycetes K-004. The culture is subjected to the shaking culture at 25°C for 7 days to obtain cells comprising mainly hyphae.

Cells are collected by centrifugation, washed twice with distilled water and macerated and broken by a homogenizer.

The cells are centrifuged again and the supernatant is removed to obtain homogenized cells. Sterilized water, maltose and clay are added to the homogenized cells for preparing a cell suspension comprising 20% of cells, 10% of maltose and 1% of clay.

The thus obtained suspension is spreaded over a glass plate using a spreader for thin layer chromatography and dried overnight under normal pressure and at room temperature to obtain 9.6 g of preparation No. 1 containing microbial viable cells.

[Embodiment 2]

As in the Embodiment 1, hyphomycetes K-004 is cultured in 500 ml of C-100 culture solution, washed and homogenized for preparing a cell suspension comprising 20% of cells, 10% of maltose and 1% of silica gel (granule diameter of 0.063 - 0.200 mm).

The thus obtained suspension is sprayed over a Teflon plate and dried overnight under normal pressure and at room temperature to obtain 9.4 g of preparation No. 2 containing microbial viable cells.

[Embodiment 3]

As in the Embodiment 1, hyphomycetes K-004 is cultured in 500 ml of C-100 culture solution, washed and homogenized for preparing a cell suspension comprising 20% of cells, 10% of lactose, 1% of Bacto-peptone (mfd. by DIFCO) and 1% of silica gel.

The thus obtained suspension is sprayed over a Teflon plate and dried overnight under normal pressure and at room temperature to obtain 10.2 g of preparation No. 3 containing microbial viable cells.

[Embodiment 4]

As in the Embodiment 1, hyphomycetes B026 is cultured in 500 ml of C-100 culture solution, washed and homogenized for preparing a cell suspension comprising 35% of cells, 9% of lactose and 1% of silica gel.

The thus obtained suspension is sprayed over a Teflon plate and dried overnight under normal pressure and at room temperature to obtain 10.3 g of preparation No. 4 containing microbial viable cells.

[Embodiment 5]

As in the Embodiment 1, hyphomycetes B026 is cultured in 500 ml of C-100 culture solution, washed and homogenized for preparing a cell suspension comprising 35% of cells, 9% of lactose and 1% of clay.

The thus obtained suspension is sprayed over a Teflon plate and dried overnight under normal pressure and at room temperature to obtain 10.5 g of preparation No. 5 containing microbial viable cells.

[Embodiment 6]

As in the Embodiment 1, hyphomycetes B276 is cultured in 500 ml of C-100 culture solution, washed and homogenized for preparing a cell suspension comprising 35% of cells, 9% of lactose and 1% of silica gel.

The thus obtained suspension is sprayed over a Teflon plate and dried overnight under normal pressure and at room temperature to obtain 17.8 g of preparation No. 6 containing microbial viable cells.

[Embodiment 7]

As in the Embodiment 1, hyphomycetes B276 is cultured in 500 ml of C-100 culture solution, washed and homogenized for preparing a cell suspension comprising 35% of cells, 9% of lactose and 1% of clay.

The thus obtained suspension is sprayed over a Teflon plate and dried overnight under normal pressure and at room temperature to obtain 17.5 g of preparation No. 7 containing microbial viable cells.

[Test examples]

Next, the stability after standing and the activity of the viable cell-containing preparations No. 1 to 7 obtained in the abovementioned embodiments 1 to 7 are tested as follows.

[Test example 1]

As the invention group, the stability on standing of the viable cell-containing preparations No. 1 to 7 obtained in the embodiments 1 to 7 is tested immediately after the production, 1 month, 2 months and 3 months after the conservation in a refrigerator by measuring the number of viable cells contained in the respective preparation corresponding to the viable cell live weight of 0.5 g.

As the reference group, 500 ml of C-100 culture solution is poured by 100 ml into 5 conical flasks of 500 ml respectively, sterilized and inoculated with hyphomycetes K-004, B026 and B276. The culture is subjected to the shaking culture at 25°C for 7 days to obtain cells comprising mainly hyphae. Cells are collected by centrifugation, washed twice with distilled water and macerated and broken by a homogenizer. Cell suspensions comprising 20% of cells and 1% of clay for K-004, and 35% of cells and 1% of clay for B026 and B276, respectively, are prepared.

The thus obtained suspensions are sprayed over Teflon plates and dried overnight under normal pressure and at room temperature to obtain reference preparations. For 1.9 g of K-004 reference preparation, 4.3 g of B026 reference preparation and 6.8 g of B276 reference preparation respectively, the stability after standing is tested immediately after the production, 1 month, 2 months and 3 months after the conservation in a refrigerator by measuring the number of viable cells contained in the respective preparation corresponding to the viable cell live weight of 0.5 g as with the invention group.

As the control group, 500 ml of C-100 culture solution is poured by 100 ml into 5 conical flasks of 500 ml respectively, sterilized and inoculated with hyphomycetes K-004, B026 and B276. The culture is subjected to the shaking culture at 25°C for 7 days to obtain cells comprising mainly hyphae. Cells are collected by centrifugation, washed twice with distilled water and macerated and broken by a homogenizer.

After another centrifugation and removal of supernatant, 21.3 g of homogenized cells are obtained for K-004, 38.8 g of homogenized cells are obtained for B026 and 70.5 g of homogenized cells are obtained for B276.

Without drying, the stability on standing of these homogenized cells is tested immediately after the production, 1 month, 2 months and 3 months after the conservation in a refrigerator by measuring the number of viable cells contained in the respective preparation corresponding to the viable cell live weight of 0.5 g as with the invention group.

All tests are performed twice and repeated three times respectively.

The results are shown in Tables 1 to 3.

The number of viable cells are expressed by the rate of the value immediately after the production of the control group through the estimation of the number of surviving cells after the preparation by separating the cells using a dilution plating method and determining their logarithmic value.

Table 1

| | K-004 viable cell rate* | | | |
| | Imm.aft. | 1m | 2m | 3m |
|---|---|---|---|---|
| Control (before drying) | 1.00 | 0.00 | 0.00 | 0.00 |
| Reference (reference preparation) | 0.65 | 0.64 | 0.65 | 0.52 |
| Invention (viable cell containing preparation No.1) | 0.94 | 0.95 | 0.94 | 0.91 |
| Invention (viable cell containing preparation No.2) | 1.09 | 1.09 | 1.06 | 1.07 |
| Invention (viable cell containing preparation No.3) | 1.05 | 1.08 | 1.07 | 1.05 |

\* Rate of the value immediately after the production of the control group (before drying)
m : month(s)

Table 2

| | B026 viable cell rate* | | | |
| | Imm.aft. | 1m | 2m | 3m |
|---|---|---|---|---|
| Control (before drying) | 1.00 | 0.85 | 0.71 | 0.52 |
| Reference (reference preparation) | 0.82 | 0.82 | 0.84 | 0.71 |
| Invention (viable cell containing preparation No.4) | 0.95 | 0.92 | 0.91 | 0.90 |
| Invention (viable cell containing preparation No.5) | 0.95 | 0.94 | 0.91 | 0.87 |

\* Rate of the value immediately after the production of the control group (before drying)
m : month(s)

Table 3

| | B276 viable cell rate [*] | | | |
|---|---|---|---|---|
| | Imm.aft. | 1m | 2m | 3m |
| Control (before drying) | 1.00 | 0.75 | 0.45 | 0.41 |
| Reference (reference preparation) | 0.85 | 0.76 | 0.79 | 0.76 |
| Invention (viable cell containing preparation No.6) | 1.03 | 1.05 | 0.98 | 0.93 |
| Invention (viable cell containing preparation No.7) | 1.03 | 0.98 | 0.93 | 0.90 |

\* Rate of the value immediately after the production of the control group (before drying)
m : month(s)

In the control group wherein hyphomycetes K-004 are conserved without drying, viable cells die out totally one month after.

In the reference group, the cell survival rate decreases with the drying while, in the invention group, cells do not perish with drying and the number of viable cells as prepared is substantially maintained even three (3) months after.

In the control group wherein hyphomycetes B026 and B276 is conserved without drying, the survival rate of viable cells decreases two (2) or three (3) months later.

On the other hand, in the reference group dried without addition, the cell survival rate decreases slightly with the drying while in the invention group wherein saccharide and property improver are added and dried, cells do not perish with drying and the number of viable cells as prepared is substantially maintained even three (3) months after.

[Test example 2]

As the invention group, the viable cell-containing preparations No. 1 to 7 obtained in the embodiments 1 to 7 are conserved in a refrigerator, at immediately after the production and 1 month, 2 months and 3 months after the conservation, an amount equivalent to 0.5 g of viable cell live weight per 1 ml is suspended in 0.1% aqueous solution of Tween 80. The respective liquid preparation is inoculated by spraying, at the rate of 1 ml per 1/10000a for K-004, on to spikesedge 2 to 3 weeks after transplantation (stem length 10 to 15 cm) and at the rate of 2 ml per 1/10000a for B026 and B276 on to barnyard grass 7 to 12 days after sowing (1.2 to 1.5 leaf phase).

The inoculated spikesedge is left for 24 hours in a greenhouse at 25°C, then left for 24 hours in an inoculation box at 22°C and returned to the greenhouse at 25°C and left there for 21 days before checking the disease occurrence rate and the disease degree.

Barnyard grass is left in an inoculation box at 22°C immediately after the inoculation, then left in a greenhouse at 25°C before checking disease area.

Moreover, the viable cell-containing preparations No. 4 to 7 are also conserved in a refrigerator, at immediately after the production and 1 month, 2 months and 3 months after the conservation, an amount equivalent to 0.5 g of viable cell live weight per 1 ml is suspended in 0.02% aqueous solution of Triton X-100 and are inoculated by dropping, at the rate of 6 ml per 1/10000a on to barnyard grass (1.5 leaf phase) grown in a pot.

7

In the dropping inoculation, the number of growing barnyard grass plants is counted at first, then water is poured up to 3 cm, the respective preparation solution is suspended therein by dropping and left in a greenhouse at 25°C for 14 days before checking the rate of wilt.

As the reference group, the respective preparations obtained in the Test example 1 are conserved in a refrigerator, at immediately after the production and 1 month, 2 months and 3 months after the conservation, an amount equivalent to 0.5 g of viable cell live weight per 1 ml is suspended in 0.1% aqueous solution of Tween 80 and in 0.02% aqueous solution of Triton X-100. The respective liquid preparation is inoculated by spraying and dropping, as in the invention group, at the rate of 1 ml, 2 ml and 6 ml per 1/10000a on to spikesedge 2 to 3 weeks after transplantation and on to barnyard grass 7 to 12 days after sowing before checking the disease occurrence and the disease degree, the disease area and the wilt rate, respectively.

As the control group, viable cells of K-004 are prepared and used for each test as in the Test example 1.

Moreover, viable cells of B026 and B276 are prepared as in the Test example 1, conserved in a refrigerator and used immediately after the production and 1 month, 2 months and 3 months after.

Namely, 0.5 g of viable cells per 1 ml is suspended in 0.1% aqueous solution of Tween 80 and in 0.02% aqueous solution of Triton X-100. The respective liquid preparation is inoculated by spraying and dropping, as in the invention group, at the rate of 1 ml, 2 ml and 6 ml per 1/10000a on to spikesedge 2 to 3 weeks after the transplantation and on to barnyard grass 7 to 12 days after the sowing before checking disease occurrence and the disease degree, the disease area and the wilt rate, respectively.

All tests are performed twice and repeated 3 to 5 times.

The results are shown in Tables 4 to 6.

The disease occurrence rate of K-004 is obtained by calculating the percentage of sick stems against the total number of inoculated stems and expressed as the rate compared to that of the control group.

As for the disease degree, first the disease index (disease area 0% : 0, less than 25% : 1, less than 50% : 2, less than 75% : 3, less than 100% : 4, wilt :5) is obtained for each of the inoculated stems, the sum of disease indexes are divided by the number of inoculated stems and the quotient is compared to the control group.

The occurrence area of B026 and B 276 is expressed by the rate of disease area to the total area of growing barnyard grass, and compared to the value immediately after the preparation of the control group without addition and drying and shown by this rate.

Table 4

| | Disease occurence rate* /degree* of K-004 inoculated spikesedge | | | |
|---|---|---|---|---|
| | Imm.aft. | 1m | 2m | 3m |
| Control (before drying) | 1.0/1.0 | 1.0/1.0 | 1.0/1.0 | 1.0/1.0 |
| Reference (reference preparation) | 0.7/0.6 | 0.5/0.5 | 0.3/0.3 | 0.6/0.5 |
| Invention (viable cell containing preparation No.1) | 2.8/4.4 | 1.5/1.5 | 4.0/7.1 | 3.7/6.9 |
| Invention (viable cell containing preparation No.2) | 1.8/2.0 | 3.6/7.5 | 3.7/5.0 | 4.3/10.1 |
| Invention (viable cell containing preparation No.3) | 4.2/9.3 | 4.0/8.7 | 4.3/10.9 | 4.1/7.4 |

* Rate of the value of the control group (before drying)
  m : month(s)

Table 5

| | Disease area (spraying)* /wilt rate (dropping)* of B026 inoculated barnyard grass | | | |
| --- | --- | --- | --- | --- |
| | Imm.aft. | 1m | 2m | 3m |
| Control (before drying) | 1.0/1.0 | 1.1/0.6 | 0.3/0.6 | 0.1/0.5 |
| Reference (reference preparation) | 0.9/0.8 | 1.1/0.7 | 0.8/0.7 | 0.7/0.6 |
| Invention (viable cell containing preparation No.4) | 1.0/0.9 | 1.2/0.8 | 1.2/0.8 | 1.2/0.7 |
| Invention (viable cell containing preparation No.5) | 1.0/0.9 | 1.2/0.8 | 1.2/0.7 | 1.2/0.8 |

* Rate of the value immediately after the preparation of the control group (before drying)
  m : month(s)

Table 6

| | Disease area (spraying)* /wilt rate (dropping)* of B276 inoculated barnyard grass | | | |
| | Imm.aft. | 1m | 2m | 3m |
|---|---|---|---|---|
| Control (before drying) | 1.0/1.0 | 0.3/0.8 | 0.1/0.7 | 0.1/0.6 |
| Reference (reference preparation) | 0.7/1.0 | 0.6/0.7 | 0.7/0.7 | 0.4/0.7 |
| Invention (viable cell containing preparation No.6) | 0.9/1.0 | 1.1/0.9 | 1.0/0.8 | 1.0/0.8 |
| Invention (viable cell containing preparation No.7) | 0.9/1.0 | 1.1/0.9 | 1.0/0.8 | 1.0/0.8 |

\* Rate of the value immediately after the preparation
   of the control group (before drying)
   m : month(s)

Concerning K-004, the disease occurrence rate and the disease degree of the reference group are lower than those of the control group and showing the decrease activity as agricultural chemicals while the invention group are better than the control group, showing both higher disease occurrence and disease degree against spikesedge and an excellent activity as agricultural chemicals. Additionally, the invention group pathogenicity with respect to spikesedge is maintained even 3 months after.

For both of B026 and B276, in the control group, the pathogenicity of spray inoculation decreases remarkably after 1 to 2 months conservation and the pathogenicity of dropping inoculation decreases also.

In the reference group, for both of B026 and B276, pathogenicity decreases somewhat with drying and during the conservation for spray inoculation and for dropping inoculation.

While in the invention group, the pathogenicity of both B026 and B276 does not decrease with drying and, even after 3 months conservation, the pathogenicity with respect to the spray inoculated barnyard grass is maintained and the pathogenicity with respect to the dropping inoculated barnyard grass is substantially maintained.

## Claims

1. A viable cell-containing preparation which comprises:
   viable cells;
   a saccharide; and
   a property improver which improves efficacy of the cells, the saccharide and a mixture of the cells and the saccharide.

2. A viable cell-containing preparation which comprises:
   viable cells;
   a saccharide;

11

a nitrogen source; and

a property improver which improves efficacy of the cells, the saccharide, the nitrogen source and a mixture of the cells, the saccharide and the nitrogen source.

3. A method of a viable cell-containing preparation which comprises the steps of drying and preparing a solution which comprises:

viable cells;

a saccharide; and

a property improver which improves efficacy of the cells, the saccharide and a mixture of the cells and the saccharide.

4. A method of a viable cell-containing preparation which comprises the steps of drying and preparing a solution which comprises:

viable cells;

a saccharide;

a nitrogen source; and

a property improver which improves efficacy of the cells, the saccharide, the nitrogen source and a mixture of the cells, the saccharide and the nitrogen source.

5. A method of a viable cell-containing preparation which comprises the steps of making a thin film by spreading or spraying the solution described in claim 3 or 4, and then drying the same.

6. The preparation of claim 1, wherein said property improver comprises mineral resolvent, a biologically and chemically inactive material, which facilitates the preparation of a powder.

7. The preparation of claim 2, wherein said property improver comprises mineral resolvent, a biologically and chemically inactive material, which facilitates the preparation of a powder.

8. The preparation method of claim 3, wherein said property improver comprises mineral resolvent, a biologically and chemically inactive material, which facilitates the preparation of a powder.

9. The preparation method of claim 4, wherein said property improver comprises mineral resolvent, a biologically and chemically inactive material, which facilitates the preparation of a powder.

10. The preparation of claim 1, wherein said property improver comprises silica gel, clay, diatomaceous earth or silicic acid.

11. The preparation of claim 2, wherein said property improver comprises silica gel, clay, diatomaceous earth or silicic acid.

12. The preparation method of claim 3, wherein said property improver comprises silica gel, clay, diatomaceous earth or silicic acid.

13. The preparation method of claim 4, wherein said property improver comprises silica gel, clay, diatomaceous earth or silicic acid.

**European Patent Office**

## EUROPEAN SEARCH REPORT

Application Number

EP 93 31 0521

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | GB-A-1 090 403 (NATIONAL RESEARCH DEVELOPMENT CORPORATION) *whole document* | 1-11 | A01N63/04 //(A01N63/04, 43:16,25:08, 25:12) |
| X | WO-A-90 15136 (BIOTECH INTERNATIONAL LIMITED) * page 3, line 25 - page 3, line 36; claims; examples * | 1,2,6,7, 10,11 | |
| X | EP-A-0 494 592 (W.R.GRACE & CO.-CONN.) * page 7, line 46 - page 8, line 23; examples * | 1,6,10 | |
| X | FR-A-2 202 159 (INSTITUT NATIONAL DE LA RECHERCHE AGRONOMIQUE) * claims; examples * | 1,6,10 | |
| X | FR-A-2 358 105 (SANDOZ S.A.) * claims; examples * | 1,6,10 | |
| A | CHEMICAL PATENTS INDEX, DOCUMENTATION ABSTRACTS JOURNAL Section Ch, Week 8844, 4 January 1989 Derwent Publications Ltd., London, GB; Class C03, AN 310704 & JP-A-63 227 507 (KEN I) 21 September 1988 | | TECHNICAL FIELDS SEARCHED (Int.Cl.5) A01N |
| A | CHEMICAL PATENTS INDEX, DOCUMENTATION ABSTRACTS JOURNAL Section Ch, Week 8540, Derwent Publications Ltd., London, GB; Class C, AN 247326 & JP-A-60 164 479 (AJINOMOTO KK) 27 August 1985 | | |

The present search report has been drawn up for all claims

| Place of search | Date of completion of the search | Examiner |
|---|---|---|
| THE HAGUE | 28 March 1994 | Donovan, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)